# FASCICULE DE BREVET EUROPEEN

(11) **EP 0 595 701 B1**
(45) Date de publication et mention de la délivrance du brevet: **10.06.1998**
(21) Numéro de dépôt: 93402609.7
(22) Date de dépôt: 25.10.1993
(51) Int. Cl.: B32B 27/32

(54) **Film composite thermorétractable, procédé de fabrication et utilisation dudit film pour le suremballage d'articles**
Wärmeschrumpfbarer Verbundfilm, Verfahren zu seiner Herstellung und Verwendung für Verpackungen
Composite heat-shrinkable film, method of manufacture and its use for packaging

(30) Priorité: 26.10.1992 FR 9212706; 06.04.1993 FR 9304057
(43) Date de publication de la demande: 04.05.1994
(73) Titulaire: BOLLORE TECHNOLOGIES, F-29000 Quimper (FR)
(72) Inventeur: Billion, Marc, F-56520 Guidel (FR); Gueguen, Michel, F-29170 Fouesnant (FR)
(74) Mandataire: Warcoin, Jacques

(56) Documents cités:
- EP-A- 0 247 897
- EP-A- 0 282 282
- EP-A- 0 285 444
- EP-A- 0 374 783
- EP-A- 0 477 742
- FR-A- 2 635 312
- DATABASE WPI Week 9025, Derwent Publications Ltd., London, GB; AN 90-190133 & JP-A-2 125 734 (SUMITOMO CHEM. IND. KK)
- DATABASE WPI Week 8925, Derwent Publications Ltd., London, GB; AN 89-182386 & JP-A-1 120 339 (ASAHI CHEMICAL IND. KK)
- DATABASE WPI Week 8937, Derwent Publications Ltd., London, GB; AN 89-267783 & JP-A-1 195 043 (OKURA INDUSTRIAL KK)

## Description

La présente invention concerne un film composite thermorétractable comprenant une couche de coeur constituée principalement de matériaux élastomères polyoléfiniques et deux couches externes ou intermédiaires appliquées sur chaque surface de la couche de coeur, lesdites couches intermédiaires et externes étant formées d'une ou plusieurs polyoléfines dont le module de flexion est supérieur à 200 MPa selon ASTM D 790 et dont le point de fusion est supérieur à 100°C selon ASTM D 1525.

Elle a également pour objet un procédé de fabrication de tels films et l'utilisation de ceux-ci pour le suremballage d'articles.

Les films thermorétractables sont généralement constitués de structures mono ou multicouche à base de polyoléfines, de copolymère éthylène acétate de vinyle, de polyester ou de poly(chlorure de vinyle).

Les principales caractéristiques de ces films thermorétractables sont appréciées par la mesure :
- du retrait en fonction de la température,
- de la force de retrait,
- de la résistance à la propagation de la déchirure et à la déchirure amorcée,
- des caractéristiques optiques et en particulier la brillance et la transparence.

Les films à base de poly(chlorure de vinyle) présentent de nombreuses qualités permettant une mise en oeuvre aisée parce qu'ils tolèrent des conditions thermiques et de défilement variables.

En effet, souvent les fours qui servent à rétracter le film sont mal réglés :
- soit ils sont trop chauds et les films fondent sur le paquet à emballer ou, dans le cas de paquets souples, la force de retrait du film déforme le paquet ;
- soit le four est trop froid ou mal ventilé, le film est alors non rétracté ou incomplètement rétracté ;
- soit la température du four est correcte mais la durée de séjour de l'emballage dans le four est non suffisante et alors le film est non rétracté ou incomplètement rétracté.

Dans tous les cas de figure précédemment décrits, les films en PVC donnent satisfaction.

En particulier, les films PVC peuvent être rétractés dans une large plage de températures et avec une vitesse de passage dans le four qui peut varier de façon appréciable, ce qui leur donne un confort de rétraction remarquable.

Leur force de retrait est par ailleurs suffisamment faible pour permettre l'emballage d'articles déformables comme par exemple les articles de papeterie (paquets d'enveloppes à lettre...). Les films PVC possèdent en outre d'excellentes qualités optiques.

On sait toutefois que les films à base de poly(chlorure de vinyle) font souvent l'objet de réactions négatives de la part des utilisateurs, du fait qu'ils dégagent une odeur déplaisante pendant le scellement par fusion. Par ailleurs, des gaz nocifs s'échappent lors de l'incinération des films usés et, pour des raisons écologiques, cet inconvénient devient inacceptable.

Les films à base de poly(chlorure de vinyle) présentent également certains inconvénients lors de leur utilisation : ils présentent un caractère corrosif néfaste pour les machines à emballer et les rendements surfaciques sont insuffisants du fait que les films en poly(chlorure de vinyle) ont une densité de 1,38 et une épaisseur généralement supérieure à 12 micromètres ce qui conduit à des poids/m² élevés et des surfaces par kilogramme faibles.

C'est pour cela que les films à base de polyoléfines ou analogues tendent de plus en plus à remplacer les films à base de poly(chlorure de vinyle).

Certaines structures polyoléfiniques ont été décrites notamment dans les brevets suivants :

Le brevet français FR-A-2 521 907 décrit une pellicule de polyoléfines multicouche comprenant une couche de coeur à base de polyéthylène linéaire de faible ou de moyenne densité et deux couches de peau comprenant un mélange de copolymère éthylène-propylène à faible teneur en éthylène et d'un homopolymère de propylène, les couches de peau assurant la tenue mécanique et les qualités optiques de la pellicule.

Le brevet européen EP-A-285 444 décrit un film étiré composite comportant une couche de coeur comprenant un polyéthylène linéaire basse densité ou un copolymère éthylène propylène à faible teneur en éthylène (2 à 6 %) et deux couches externes formées d'un polyéthylène linéaire basse densité ou d'un copolymère éthylène propylène à faible teneur en éthylène. Ces différentes couches sont séparées par deux couches intermédiaires qui sont notamment à base d'un copolymère éthylène acétate de vinyle, éthylène acrylate de butyle et un mélange de polyéthylène linéaire basse densité en association avec les copolymères précédemment cités.

Le brevet FR-A-2 635 312 décrit une pellicule composite thermorétractable comportant une couche de coeur formée d'un polyéthylène basse densité à chaîne linéaire et/ou d'un copolymère de propylène et d'une ou plusieurs alpha-oléfines et deux couches externes formées d'un copolymère cristallin de polypropylène et d'au moins une autre alpha-oléfine.

Toutefois, ces structures polyoléfiniques sont difficilement recyclables à cause de la présence d'une proportion importante de polyéthylène basse densité associé aux copolymères. Par ailleurs, les films à base de polyoléfines présentent un coefficient de rétraction important qui interdit leur utilisation pour l'emballage de certains articles comme les enveloppes à lettre. De plus, ces films ne peuvent être rétractés que dans des plages de températures étroites et élevées ce qui nécessite un contrôle sévère de ces conditions et ne présente pas un confort de rétraction satisfaisant.

Par l'expression confort de rétraction, on entend dans la présente description le fait de pouvoir rétracter le film dans une large gamme de températures et avec des vitesses de défilement pouvant varier dans une large gamme.

On a bien développé un film à basse force de retrait dans le brevet US 5 023 143, mais ce film est à base de polyéthylène et de copolymère d'éthylène ce qui le rend très mou, déformable et de qualités optiques insuffisantes.

Les films selon la présente invention présentent un excellent confort de rétraction et les propriétés des films de PVC sans en avoir les inconvénients.

La présente invention a pour objet général un film composite thermorétractable qui présente une amélioration par rapport au film déjà décrit dans l'art antérieur.

Elle a notamment pour objet un film composite thermorétractable à base de polyoléfines ayant des propriétés optiques améliorées.

Un autre objet de l'invention est de proposer un film présentant une excellente thermoscellabilité et un confort de rétraction amélioré du fait qu'il peut être rétracté dans une large gamme de températures avec une large variation de vitesse de défilement dans le four.

Dans le cas des films selon l'invention qui ne comportent qu'une faible proportion de polyéthylène basse densité linéaire, un autre objet de la présente invention est de proposer des films ayant des propriétés similaires à celles des PVC tout en étant recyclables.

Un autre objet de la présente invention est de proposer un film composite mince dont l'épaisseur est généralement inférieure ou égale à 15 micromètres.

D'autres avantages du film composite selon la présente invention apparaitront à la description ci-après.

Selon l'invention le film composite thermorétractable est caractérisé en ce qu'il comprend une couche de coeur et deux couches externes ou intermédiaires appliquées sur chaque surface de la couche de coeur, lesdites couches externes et intermédiaires étant formées d'une ou plusieurs polyoléfines dont le module de flexion est supérieur à 200 MPa selon ASTM D 790 et dont le point Vicat est supérieur à 100°C selon ASTM D 1525, ladite couche de coeur étant formée
d'un ou plusieurs élastomères polyoléfiniques dont le module de flexion est inférieur à 200 MPa selon ASTM D 790 et le point Vicat est inférieur à 65°C selon ASTM D 1525,
ou la couche de coeur a un module de flexion compris entre 100 et 350 MPa et un point Vicat compris entre 50°C et 65°C, la couche de coeur étant formée en pourcentage en poids de :
   - 60 à 90 % d'un élastomère polyoléfinique de module de flexion inférieur à 200 MPa, de préférence inférieur à 150 MPa et de point Vicat compris entre 50 et 60°C,
   - 5 à 30 % de résine améliorant la soudabilité choisie notamment parmi les polyéthylènes basse densité linéaire, les acétates de polyvinyle, les résines ionomères, les polyterpènes, les résines hydrocarbonées aliphatique cyclique,
   - 0 à 20 % de polyéthylène haute densité,
      lesdits élastomères polyoléfiniques étant choisis parmi ceux présentant la composition suivante en poids :
   - éthylène 50 à 70 %
   - propylène 30 à 50 %
   - dérivé diénique comme le butadiène ou un diène conjugué analogue 3 à 5 %
      ou les élastomères à base de :
   - éthylène 35 à 75 %,
   - propylène 25 à 65 %.

Selon la présente description, l'expression couche de coeur est relative à une couche dans un film multicouche qui est prise en sandwich dans les couches externes ou couches intermédiaires. Le film pourra être constitué notamment de trois couches, une couche de coeur et deux couches de peau ou de cinq couches comportant une couche intermédiaire séparant deux couches de coeur elles-mêmes recouvertes par deux couches externes ou couches de peau.

La norme ASTM est bien connue de l'homme du métier et est remise à jour périodiquement. Elle est notamment publiée dans les brochures techniques appropriées.

Comme cela sera compris au vu de la description ci-après, lesdites couches pour certaines applications pourront comprendre d'autres polymères.

Il doit être clair pour l'homme du métier que lesdites couches externes, intermédiaires ou de coeur, en plus du composant polymérique, contiennent dans les proportions usuelles les différents ingrédients bien connus tels que les agents antiblocage ou de glissement pour les couches intermédiaires ou externes et les agents antiglissants pour les couches de coeur par exemple.

Selon une première variante, l'invention a pour objet des films présentant un module élevé pour une application où l'utilisation de films fins est possible (suremballage d'objets rigides). Ces films présentant un confort de rétraction satisfaisant.

Selon cette variante, les polyoléfines formant les couches intermédiaires ou externes sont à base de polypropylène et ont un module de flexion compris entre 750 MPa et 2500 MPa selon ASTM D 790, de préférence entre 750 et 1500 MPa et avantageusement supérieur ou égal à 780 MPa, et un point Vicat supérieur ou égal à 127°C selon ASTM D 1525 et inférieur à 155°C.

Par l'expression "polyoléfines à base de propylène", on entend que lesdites couches comportent principalement notamment à hauteur d'au moins 80 %, et avantageusement 90 %, un ou plusieurs polypropylènes.

Parmi les polymères formant la couche externe ou couche intermédiaire convenant dans le cadre de cette variante, on citera notamment les homopolymères de polypropylène obtenus par polymérisation de propylène avec les catalyseurs appropriés, les copolymères éthylène propylène à faible teneur en éthylène (moins de 10 % et de préférence 2 à 8 %) ou un mélange de tels polymères.

De manière connue, ces polymères sont associés à de faibles quantités d'agents de glissement et antiblocage.

Parmi les agents antiblocage, on peut citer la silice et parmi les agents de glissement ou plastifiant, on peut citer à titre indicatif la stéaramide ou l'érucamide. Typiquement, ces additifs seront présents dans une proportion en poids n'excédant pas 0,5 % par rapport au mélange total.

Afin d'améliorer encore le confort de rétraction, les polyoléfines à base de polypropylène formant les couches intermédiaires ou externes peuvent être associées dans une proportion inférieure à 30 %, de préférence comprise entre 5 et 20 % en poids par rapport au mélange, à un polyéthylène linéaire de basse densité.

Par l'expression "mélange", on entend dans cette description l'ensemble des composants polymériques ou des additifs formant le film.

Selon une seconde variante, l'invention a pour objet un film présentant en plus du confort de rétraction une excellente thermoscellabilité. Selon cette variante, les polyoléfines formant les couches intermédiaires ou externes sont à base de polypropylène et ont un module de flexion compris entre 600 et 750 MPa selon ASTM D 790 et un point Vicat compris entre 120 et 127°C selon ASTM D 1525.

De préférence, les polyoléfines à base de polypropylène selon cette seconde variante ont un module de flexion compris entre 620 et 720 MPa.

Généralement les polyoléfines à base de polypropylène formant les couches intermédiaires ou externes selon cette seconde variante sont choisies parmi les homopolymères de polypropylène obtenus par polymérisation de propylène avec les catalyseurs appropriés, les copolymères éthylène-propylène à faible teneur en éthylène (moins de 10 % et de préférence 2 à 8 %) ou un mélange de tels polymères.

Comme dans la première variante, afin d'améliorer encore le confort de rétraction, les polyoléfines à base de polypropylène formant les couches intermédiaires ou externes peuvent être associées dans une proportion inférieure à 30 %, de préférence comprise entre 5 et 20 % en poids par rapport au mélange, à un polyéthylène linéaire de basse densité.

Selon une troisième variante de la présente invention, les polyoléfines formant les couches externes et intermédiaires sont formées de 1 à 30 % de polyéthylène basse densité radicalaire, 60 à 94 % de polyéthylène basse densité linéaire, en poids par rapport au mélange, et ont un module de flexion compris entre 200 et 600 MPa selon ASTM D 790 et le point Vicat est compris entre 100 et 125°C selon ASTM D 1525.

Cette troisième variante présente l'avantage d'améliorer encore la thermoscellabilité du film, ce qui induit une augmentation des retraits à basse température et une amélioration de la résistance à la déchirure amorcée.

De manière connue, les polymères formant la couche de coeur sont associés à des agents glissants et d'aide à la mise en oeuvre comme le polybutylène dans une proportion n'excédant pas 6 % en poids.

Selon une variante préférée, la couche de coeur présentera un module de flexion inférieur à 150 MPa selon ASTM D 790 et un point Vicat inférieur à 60°C selon ASTM D 1525.

Lorsque la couche de coeur a un module de flexion compris entre 100 et 350 MPa et un point Vicat compris entre 50°C et 65°C, la couche de coeur étant formée en pourcentage en poids de: - 60 à 90 % d'un élastomère polyoléfinique de module de flexion inférieur à 200 MPa, de préférence inférieur à 150 MPa et de point Vicat compris entre 50 et 60°C,
- 5 à 30 % de résine améliorant la soudabilité choisie notamment parmi les polyéthylènes basse densité linéaire, les acétates de polyvinyle, les résines ionomères, les polyterpènes, les résines hydrocarbonées aliphatique cyclique,
- 0 à 20 % de polyéthylène haute densité facilitant la mise en oeuvre,
   cette couche de coeur est associée à deux couches externes ou intermédiaires de module de flexion compris entre 750 MPa et 2500 MPa de préférence entre 750 et 1500 et avantageusement supérieur à 780 MPa et un point Vicat compris entre 127°C et 155°C.

Les matériaux élastomères sont choisis avantageusement parmi les élastomères à base de :
- éthylène 50 à 70 %
- propylène 30 à 50 %
- dérivé diénique comme le butadiène ou un diène conjugué analogue 3 à 5 %
   ou les élastomères à base de :
- éthylène 35 à 75 %,
- propylène 25 à 65 %.

Selon un mode de réalisation, le film composite sera formé d'une structure sandwich trois couches notamment selon les proportions suivantes en poids :
- première couche externe, 2,5 à 35 %,
- couche de coeur, 30 à 95 %,
- deuxième couche externe, 2,5 à 35 %.

De façon générale, ce film aura une épaisseur comprise entre 12 et 20 micromètres et de préférence inférieure à 10 micromètres.

Selon la présente invention, la couche de coeur apporte l'élasticité et la résistance à la propagation de la déchirure amorcée ou non et à la perforation. Elle permet également le retrait à basse température avec une faible force de retrait.

Selon une variante particulièrement avantageuse permettant de fournir un film respectant l'environnement, l'invention concerne un film composite recyclable et/ou incinérable ayant une couche de coeur telle que définie précédemment avec toutes les variantes avantageuses mentionnées ci-avant, caractérisé en ce qu'il comprend deux couches externes formées d'une ou plusieurs polyoléfines à base de polypropylène ayant un module de flexion compris entre 600 et 750 MPa, de préférence 620-720 MPa selon ASTM D 790 et un point Vicat compris entre 120° et 127°C selon ASTM D 1525, en ce que lesdites polyoléfines sont éventuellement associées dans une proportion inférieure à 30 % et de préférence comprise entre 5 et 20 % en poids par rapport au mélange à un polyéthylène linéaire de basse densité et en ce qu'elles sont choisies parmi les homopolymères de polypropylène, les copolymères éthylène-propylène à faible teneur en éthylène ou un mélange de tels polymères.

Les couches intermédiaires ou externes apportent les propriétés optiques (brillance, transparence), les propriétés de thermoscellabilité et permettent l'obtention de différents états de surface et permettent de modifier les caractéristiques mécaniques des films en corrigeant si nécessaire les faibles caractéristiques de la couche de coeur.

L'invention concerne également un procédé de production de films composites thermorétractables selon l'invention.

La première étape consiste à mélanger les polymères et les additifs pour les diverses couches. Puis, on procède à la co-extrusion des couches pour former un film composite. Cette étape est suivie d'un bi-étirage préférentiellement réalisé par un procédé à bulle muni de fours de préchauffage à infra-rouge ou à cylindre chauffant.

Il est également possible de procéder à la co-extrusion suivie d'un bi-étirage à plat.

L'invention a également pour objet l'utilisation des films minces thermorétractables tels qu'ils viennent d'être décrits ci-dessus pour le suremballage d'articles aussi divers que les produits papetiers (livres, enveloppes), les aliments (plateaux d'oeufs, légumes etc.), les produits ménagers et les boîtes (jeux, gâteaux, chocolats, etc).

Les films composites selon l'invention sont entièrement recyclables dans le cas de l'absence de polyéthylène et du fait que le film selon l'invention est alors constitué d'une structure copolymère éthylène-propylène. Les normes relatives au respect de l'environnement devenant de plus en plus sévères, le traitement du film usagé selon l'invention permet, à la sortie des broyeurs, de récupérer des produits satisfaisant à ces normes et permettant ainsi leur recyclage.

L'invention est illustrée par les exemples ci-après donnés à titre indicatif. Les films trois couches sont réalisés selon le procédé bien connu de bi-étirage par procédé double bulle ou un procédé à plat comme ceci est décrit par exemple dans le brevet FR-A- 2 521 907.

### Exemple I

On réalise un film composite ayant la structure suivante :
- Les deux couches externes sont constituées en pourcentage en poids de :
   94 % d'un copolymère statistique à 4 % d'éthylène à module de flexion de 800 MPa et à point Vicat de 130°C.
   2 % d'un mélange maître avec agents glissants (érucamide),
   4 % d'un mélange maître d'agent antiblocage.
- La couche de coeur est constituée en pourcentage en poids de :
   94 % d'un élastomère éthylène et propylène à 40 % d'éthylène à module de flexion 100 MPa et à point Vicat de 55°C.
   2 % d'un mélange maître avec agents glissants (érucamide)
   4 % d'un polybutylène.

Les couches externes ont une épaisseur chacune de 2,5 micromètres tandis que la couche de coeur a une épaisseur de 8 micromètres.

### Exemple II

Un film similaire à celui obtenu à l'exemple I présente la structure suivante :

Les couches externes sont constituées de 94 % d'un copolymère éthylène propylène (teneur en éthylène 2 %) à point Vicat de 148°C et d'un module de 1350 MPa et 6 % d'agents de glissement et d'antiblocage.

La couche interne est identique à celle de l'exemple I.

Les couches externes ont une épaisseur chacune de 1,5 micromètres tandis que la couche d'âme à une épaisseur de 10 micromètres.

### Exemple III

On réalise un film similaire à celui des exemples I et II comportant deux couches externes constituées de 94 % d'un homopolymère de polypropylène ayant les caractéristiques suivantes:
- point Vicat : 155°C
- module : 2400 MPa
   et 6 % d'agents de glissement et d'antiblocage,
   et une couche de coeur constituée d'un élastomère éthylène propylène similaire à celui de l'exemple I.

Les couches externes ont une épaisseur de 1 micromètre et la couche de coeur a une épaisseur de 10 micromètres.

### Exemple IV (comparatif)

Deux films composites ont été réalisés selon l'exemple 1 mais en remplaçant la couche de coeur par :
- une couche de polyéthylène linéaire basse densité d'épaisseur 9 µm (exemple IV- 1) dont les caractéristiques sont les suivantes :
   Point Vicat : 100 °C
   module : 100 MPa
- une couche de copolymère statistique à 4 % d'éthylène d'épaisseur 10 µm (exemple IV.2) dont les caractéristiques sont les suivantes :
   Point Vicat : 130 °C
   module : 800 MPa

### Exemple V - Résultats.

Les performances en ce qui concerne la rétraction libre à 80 et 120°C, la force de retrait en g/cm, la résistance à la déchirure amorcée en Newton ont été comparées pour les films de l'exemple IV et celui de l'exemple I. Les résultats sont indiqués dans le tableau ci-dessous.

| | | **Ex. 1** | | **Ex. IV-1** | | **Ex.** | **IV-2** |
|---|---|---|---|---|---|---|---|
| | | **s.m.** | **s.t.** | **s.m.** | **s.t.** | **s.m.** | **s.t.** |
| Rétraction libre | 80°C | 12% | 12% | 11% | 11% | 6% | 6% |
| | 120°C | 34% | 38% | 40% | 40% | 25% | 25% |
| Force de | | 32 | 35 | 32 | 38 | 38 | 42 |
| retrait g/cm | | | | | | | |
| Résistance à la déchirure amorcée (N) | | 7 | 6 | 9,5 | 8 | 9,5 | 10 |
| Allongement à la déchirure amorcée | | 7% | 6% | 7% | 5% | 2% | 2% |
| Epaisseur (µm) | | 13 | | 14 | | 15 | |
| s.m. (sens machine) - s.t. (sens travers) | | | | | | | |

On constate d'après ce tableau que les structures selon l'invention sont plus fines et permettent l'obtention de films ayant des caractéristiques équivalentes aux films multicouche sur la base de couche de coeur constituée de polyéthylène linéaire basse densité qui sont difficilement recyclables du fait de l'hétérogénéité de leur structure.

Par ailleurs, les films selon l'invention présentent des caractéristiques nettement supérieures aux films dont la couche de coeur est un copolymère statistique à 4 % d'éthylène qui eux par contre sont recyclables.

### Exemple VI

On réalise un film composite ayant la structure suivante :
- Les deux couches externes sont constituées en pourcentage en poids de :
   10 % d'un polyéthylène basse densité linéaire,
   82 % d'un copolymère statistique à 4 % d'éthylène à module de flexion de 800 MPa (ASTM D 790) et à point Vicat de 130°C (ASTM D 1525),
   3 % d'un mélange maître avec agents glissants (érucamide),
   5 % d'un mélange maître d'agent antiblocage à base de silice.
- La couche de coeur est constituée en pourcentage en poids de :
   96,5 % d'un élastomère d'éthylène et de propylène à 40 % d'éthylène à module de flexion 100 MPa et à point Vicat de 55°C et de résistance à la traction de 5 MPa (ASTM D 638).
   3,5 % d'un mélange maître d'agents glissants (érucamide).

Les couches externes ont une épaisseur chacune de 2 micromètres tandis que la couche de coeur a une épaisseur de 10 micromètres.

Le film présente les caractéristiques suivantes :

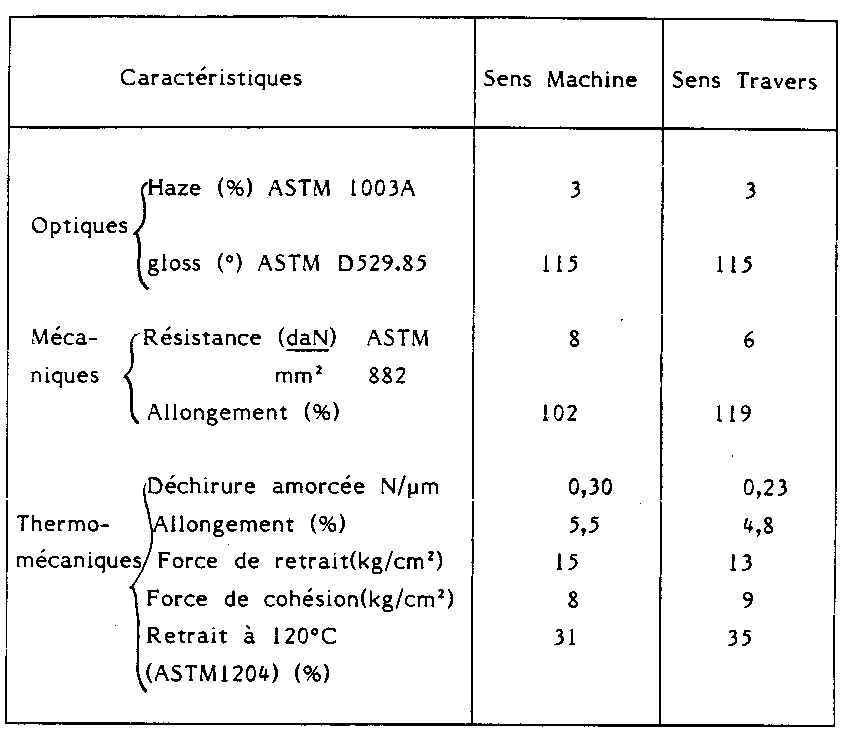

### Exemple VII

On réalise un film similaire dont la couche de coeur est identique à celle de l'exemple VI et dont les couches externes ont la composition et les caractéristiques suivantes :
10 % polyéthylène basse densité linéaire,
5 % d'un mélange maître d'agents antiblocage,
3 % d'un mélange maître d'agents glissants (érucamide),
82 % de copolymère statistique propylène éthylène à 6 % d'éthylène dont le point Vicat est de 125°C et le module de flexion de 700 MPa.

### Exemple VIII comparatif

Le film obtenu à l'exemple VI est comparé à deux films de l'art antérieur l'un en PVC, l'autre correspondant au film présenté dans l'exemple IV.2

L'objet emballé est un paquet de 20 feuilles de papier Bristol 21 x 29,7. A chaque essai, le paquet est observé et on lui donne les appréciations suivantes :
- NR: = Non Rétracté
- RI: = Rétraction Incomplète
- RC: = Rétraction Correcte
- TBR: = Très Bonne Rétraction
- EP: = Emballage Plié
- FF: = Film Fondu

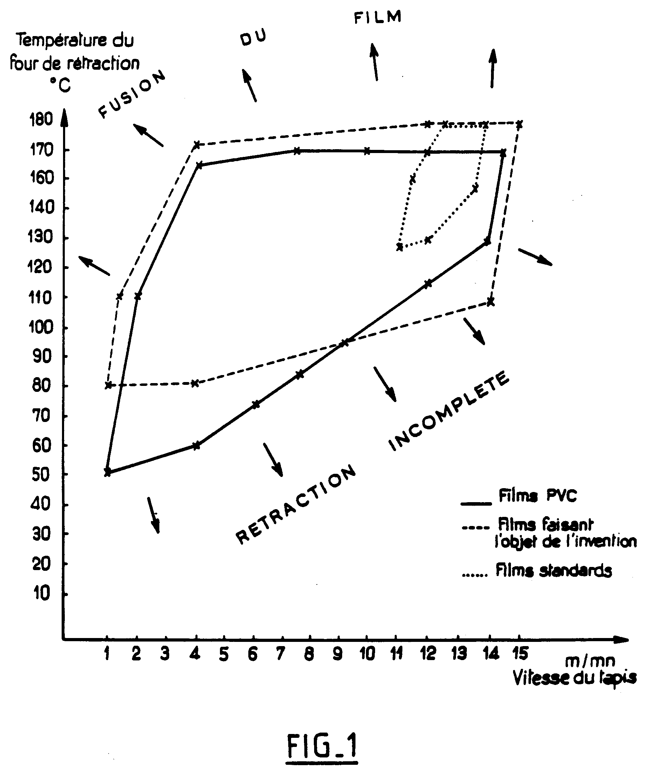

Une illustration figurée des tableaux ci-dessous est donnée à la figure unique annexée.

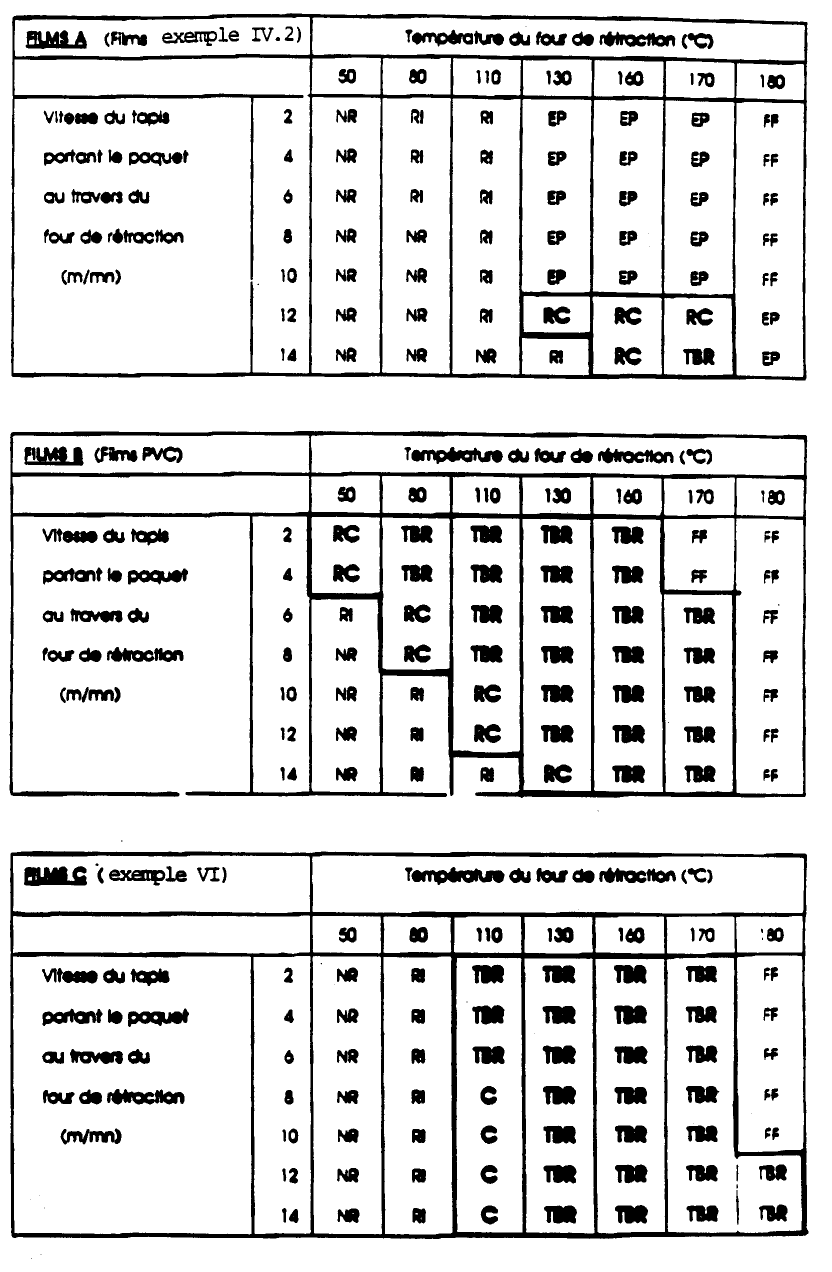

### Exemple IX

Un film similaire à l'exemple VI est réalisé dont la couche de coeur est identique à celle de l'exemple VI et dont les couches externes ont la composition et les caractéristiques suivantes :
2 % de mélange maître avec agents glissants (érucamide)
4 % d'un mélange maître d'agents antiblocage
15 % de polyéthylène basse densité radicalaire
79 % de polyéthylène basse densité linéaire de module de flexion de 140 MPa et de point de ramollissement Vicat de 100°C.

Ce film conduit à une amélioration de la thermoscellabilité du film et à une augmentation des retraits à basse température et une amélioration de la résistance à la déchirure amorcée.

### Exemple X

Un film est réalisé formé d'une couche de coeur comportant :
- 70 % d'un élastomère éthylène et propylène à 40 % d'éthylène de module de flexion 100 MPa selon ASTM D 790 et à point Vicat (selon ASTM D 1525) de 55°C (selon l'exemple I),
- 20 % d'un polyéthylène haute densité,
- 10 % d'une résine hydrocarbonée polycyclique en C5.

Le point Vicat de la couche selon ASTM D 1525 est de 59°C. Le module de flexion selon ASTM D 790 est de 280 MPa
et de deux couches de peau identiques à celles de l'exemple I.

La couche de coeur constitue 40 % d'épaisseur totale, les couches de peau chacune 30 %.

Le film présente d'excellentes propriétés thermorétractables.

### Exemple XI

Un film est réalisé formé d'une couche de coeur comportant :
- 65 % de l'élastomère selon l'exemple X,
- 15 % de polyéthylène haute densité,
- 20 % de polyéthylène vinyl acétate (EVA)
   et de deux couches de peau identiques à celles de l'exemple I.

Le point Vicat de la couche de coeur selon ASTM D 1525 est de 55°C. Le module de flexion selon ASTM D 790 est de 130 MPa. La répartition des couches en épaisseur est identique à celle de l'exemple X.

## Revendications

1. Film composite thermorétractable caractérisé en ce qu'il comprend une couche de coeur et deux couches externes ou intermédiaires appliquées sur chaque surface de la couche de coeur, lesdites couches externes et intermédiaires étant formées d'une ou plusieurs polyoléfines dont le module de flexion est supérieur à 200 MPa selon ASTM D 790 et dont le point Vicat est supérieur à 100°C selon ASTM D 1525, ladite couche de coeur étant formée
d'un ou plusieurs élastomères polyoléfiniques dont le module de flexion est inférieur à 200 MPa selon ASTM D 790 et le point Vicat est inférieur à 65°C selon ASTM D 1525,
ou la couche de coeur a un module de flexion compris entre 100 et 350 MPa et un point Vicat compris entre 50°C et 65°C, la couche de coeur étant formée en pourcentage en poids de :
- 60 à 90 % d'un élastomère polyoléfinique de module de flexion inférieur à 200 MPa, de préférence inférieur à 150 MPa et de point Vicat compris entre 50 et 60°C,
- 5 à 30 % de résine améliorant la soudabilité choisie notamment parmi les polyéthylènes basse densité linéaire, les acétates de polyvinyle, les résines ionomères, les polyterpènes, les résines hydrocarbonées aliphatique cyclique,
- 0 à 20 % de polyéthylène haute densité,
lesdits élastomères polyoléfiniques étant choisis parmi ceux présentant la composition suivante en poids :
- éthylène 50 à 70 %
- propylène 30 à 50 %
- dérivé diénique comme le butadiène ou un diène conjugué analogue 3 à 5 %
ou les élastomères à base de :
- éthylène 35 à 75 %,
- propylène 25 à 65 %.

2. Film composite selon la revendication 1, caractérisé en ce que les polyoléfines formant les couches intermédiaires ou externes sont à base de polypropylène et ont un module de flexion compris entre 750 MPa et 2500 MPa selon ASTM D 790 et un point Vicat supérieur ou égal à 127°C selon ASTM D1525.

3. Film composite selon la revendication 2, caractérisé en ce que les polyoléfines formant les couches intermédiaires ou externes ont un module de flexion supérieur ou égal à 780 MPa.

4. Film composite selon l'une des revendications 2 ou 3, caractérisé en ce que les polyoléfines formant les couches intermédiaires ou externes sont choisis parmi les homopolymères de polypropylène, les copolymères éthylène propylène à faible teneur en éthylène ou un mélange de tels polymères.

5. Film composite selon l'une des revendications 2 à 4, caractérisé en ce que les polyoléfines à base de polypropylène formant les couches intermédiaires ou externes sont associées dans une proportion inférieure à 30 %, de préférence comprise entre 5 et 20 % en poids par rapport au mélange à un polyéthylène linéaire de basse densité.

6. Film composite selon la revendication 1, caractérisé en ce que les polyoléfines à base de polypropylène formant les couches intermédiaires ou externes ont un module de flexion compris entre 600 et 750 MPa, de préférence 620-720 MPa selon ASTM D 790 et un point Vicat compris entre 120 et 127°C selon ASTM D 1525.

7. Film composite selon la revendication 6, caractérisé en ce que les polyoléfines à base de polypropylène sont associées dans une proportion inférieure à 30 % et de préférence comprise entre 5 et 20 % en poids par rapport au mélange à un polyéthylène linéaire de basse densité.

8. Film composite selon la revendication 6 ou 7, caractérisé en ce que les polyoléfines à base de polypropylène formant les couches intermédiaires ou externes sont choisies parmi les homopolymères de polypropylène, les copolymères éthylène-propylène à faible teneur en éthylène ou un mélange de tels polymères.

9. Film composite selon la revendication 1, caractérisé en ce que les polyoléfines formant les couches intermédiaires ou externes sont formées de 1 à 30 % de polyéthylène basse densité radicalaire, 60 à 94 % de polyéthylène basse densité linéaire, en poids par rapport au mélange, et ont un module de flexion compris entre 200 et 600 MPa selon ASTM D 790 et un point Vicat compris entre 100 et 125°C selon ASTM D 1525.

10. Film composite selon la revendication 1, caractérisé en ce que le polymère formant la couche de coeur a un module de flexion inférieur à 150 MPa selon ASTM D 790 et un point Vicat inférieur à 60°C selon ASTM D 1525.

11. Film composite selon l'une des revendications 1 à 5, caractérisé en ce que la couche de coeur a un module de flexion compris entre 100 et 350 MPa et un point Vicat compris entre 50°C et 65°C, la couche de coeur étant formée en pourcentage en poids de :
- 60 à 90 % d'un élastomère polyoléfinique de module de flexion inférieur à 200 MPa, de préférence inférieur à 150 MPa et de point Vicat compris entre 50 et 60°C,
- 5 à 30 % de résine améliorant la soudabilité choisie notamment parmi les polyéthylènes basse densité linéaire, les acétates de polyvinyle, les résines ionomères, les polyterpènes, les résines hydrocarbonées aliphatique cyclique,
- 0 à 20 % de polyéthylène haute densité facilitant la mise en oeuvre,
cette couche de coeur est associée à deux couches externes ou intermédiaires de module de flexion compris entre 750 MPa et 2500 MPa de préférence entre 750 et 1500 et avantageusement supérieur à 780 MPa et un point Vicat compris entre 127°C et 155°C.

12. Film composite recyclable et/ou incinérable selon la revendication 1, caractérisé en ce qu'il comprend deux couches externes formées d'une ou plusieurs polyoléfines à base de polypropylène ayant un module de flexion compris entre 600 et 750 MPa, de préférence 620-720 MPa selon ASTM D 790 et un point Vicat compris entre 120° et 127°C selon ASTM D 1525, en ce que lesdites polyoléfines sont éventuellement associées dans une proportion inférieure à 30 % et de préférence comprise entre 5 et 20 % en poids par rapport au mélange à un polyéthylène linéaire de basse densité et en ce qu'elles sont choisies parmi les homopolymères de polypropylène, les copolymères éthylène-propylène à faible teneur en éthylène ou un mélange de tels polymères.

13. Film composite selon l'une des revendications 1 à 12. caractérisé en ce qu'il est formé d'une structure sandwich trois couches selon les proportions suivantes en poids :
- première couche externe, 2,5 à 35 %,
- couche de coeur, 30 à 95 %,
- deuxième couche externe, 2,5 à 35 %, et en ce que de préférence, il a une épaisseur comprise entre 2 et 20 micromètres.

14. Utilisation des films selon l'une des revendications 1 à 13, pour le suremballage d'articles choisis notamment parmi les produits papetiers, les produits alimentaires ou ménagers.

15. Procédé de production de film composite thermorétractable et recyclable selon l'une des revendications 1 à 13, caractérisé en ce qu'on mélange les polymères et additifs des diverses couches puis en ce qu'on procède à la co-extrusion desdites couches pour former un film composite, cette étape étant suivie d'un bi-étirage.

## Claims

1. Heat-retractable composite film, characterized in that it comprises a core layer and two external or intermediate layers applied to each surface of the core layer, the said external and intermediate layers being formed from one or more polyolefins whose flexural modulus is greater than 200 MPa according to ASTM D 790 and whose Vicat point is greater than 100°C according to ASTM D 1525, the said core layer being formed
from one or more polyolefinic elastomers whose flexural modulus is less than 200 MPa according to ASTM D 790 and whose Vicat point is less than 65°C according to ASTM D 1525
or the core layer has a flexural modulus between 100 and 350 MPa and a Vicat point between 50°C and 65°C, the core layer being formed, as percentage by weight, from:
- 60 to 90 % of a polyolefinic elastomer with a flexural modulus of less than 200 MPa, preferably of less than 150 MPa, and with a Vicat point between 50 and 60°C,
- 5 to 30 % of resin which improves the weldability chosen in particular from linear low density polyethylenes, poly(vinyl acetate)s, ionomer resins, polyterpenes, or cyclic aliphatic hydrocarbon resins,
- 0 to 20 % of high density polyethylene, the said polyolefin elastomers being chosen from those exhibiting the following composition by weight:
- ethylene 50 to 70 %
- propylene 30 to 50 %
- diene derivative, such as butadiene or an analogous conjugated diene 3 to 5 %
or elastomers based on:
- ethylene 35 to 75 %,
- propylene 25 to 65 %.

2. Composite film according to Claim 1, characterized in that the polyolefins forming the intermediate or external layers are based on polypropylene and have a flexural modulus between 750 MPa and 2500 MPa according to ASTM D 790 and a Vicat point greater than or equal to 127°C according to ASTM D 1525.

3. Composite film according to Claim 2, characterized in that the polyolefins forming the intermediate or external layers have a flexural modulus greater than or equal to 780 MPa.

4. Composite film according to either of Claims 2 or 3, characterized in that the polyolefins forming the intermediate or external layers are chosen from homopolymers of polypropylene, ethylene-propylene copolymers having a low ethylene content or a mixture of such polymers.

5. Composite film according to one of Claims 2 to 4, characterized in that the polyolefins based on polypropylene forming the intermediate or external layers are combined, in a proportion of less than 30 %, preferably between 5 and 20 %, by weight with respect to the mixture, with a linear low density polyethylene.

6. Composite film according to Claim 1, characterized in that the polyolefins based on polypropylene forming the intermediate or external layers have a flexural modulus between 600 and 750 MPa, preferably 620-720 MPa, according to ASTM D 790 and a Vicat point between 120 and 127°C according to ASTM D 1525.

7. Composite film according to Claim 6, characterized in that the polyolefins based on polypropylene are combined, in a proportion of less than 30 % and preferably between 5 and 20 % by weight with respect to the mixture, with a linear low density polyethylene.

8. Composite film according to Claim 6 or 7, characterized in that the polyolefins based on polypropylene forming the intermediate or external layers are chosen from homopolymers of polypropylene, ethylene-propylene copolymers having a low ethylene content or a mixture of such polymers.

9. Composite film according to Claim 1, characterized in that the polyolefins forming the intermediate or external layers are formed from 1 to 30 % of radical low density polyethylene and 60 to 94 % of linear low density polyethylene by weight with respect to the mixture and have a flexural modulus between 200 and 600 MPa according to ASTM D 790 and a Vicat point between 100 and 125°C according to ASTM D 1525.

10. Composite film according to Claim 1, characterized in that the polymer forming the core layer has a flexural modulus of less than 150 MPa according to ASTM D 790 and a Vicat point of less than 60°C according to ASTM D 1525.

11. Composite film according to one of Claims 1 to 5, characterized in that the core layer has a flexural modulus between 100 and 350 MPa and a Vicat point between 50°C and 65°C, the core layer being formed, as percentage by weight, from:
- 60 to 90 % of a polyolefinic elastomer with a flexural modulus of less than 200 MPa, preferably of less than 150 MPa, and with a Vicat point between 50 and 60°C,
- 5 to 30 % of resin which improves the weldability chosen in particular from linear low density polyethylenes, poly(vinyl acetate)s, ionomeric resins, polyterpenes, or cyclic aliphatic hydrocarbon resins,
- 0 to 20 % of high density polyethylene facilitating use,
this core layer being associated with two external or intermediate layers with a flexural modulus between 750 MPa and 2500 MPa, preferably between 750 and 1500 and advantageously greater than 780 MPa and a Vicat point between 127°C and 155°C.

12. Composite film which can be recycled and/or incinerated according to Claim 1, characterized in that it comprises two external layers formed from one or more polyolefins based on polypropylene having a flexural modulus between 600 and 750 MPa, preferably 620-720 MPa, according to ASTM D 790 and a Vicat point between 120° and 127°C according to ASTM D 1525, in that the said polyolefins are optionally combined, in a proportion of less than 30 % and preferably between 5 and 20 % by weight with respect to the mixture, with a linear low density polyethylene and in that they are chosen from homopolymers of polypropylene, ethylene-propylene copolymers having a low ethylene content or a mixture of such polymers.

13. Composite film according to one of Claims 1 to 12, characterized in that it is formed of a three layer sandwich structure according to the following proportions by weight:
- first external layer, 2.5 to 35 %,
- core layer, 30 to 95 %,
- second external layer, 2.5 to 35 %,
and in that it preferably has a thickness between 2 and 20 micrometres.

14. Use of the films according to one of Claims 1 to 13 for the exterior wrapping of articles chosen in particular from paper products, foodstuffs or household products.

15. Process for the production of heat-retractable and recyclable composite film according to one of Claims 1 to 13, characterized in that the polymers and additives of the various layers are mixed and in that the coextrusion of the said layers is then carried out to form a composite film, this stage being followed by a biaxial drawing.

## Patentansprüche

1. Wärmeschrumpfbarer Verbundfilm, dadurch gekennzeichnet, daß er eine Kernschicht und zwei äußere Schichten oder Zwischenschichten, aufgetragen auf jede Oberfläche der Kernschicht aufweist, wobei die äußeren Schichten und Zwischenschichten aus einem oder mehreren Polyolefinen gebildet sind, deren Biegemodul über 200 MPa gemäß ASTM D 790 ist und deren Vicat-Punkt über 100°C gemaß ASTM D 1525 liegt, wobei die Kernschicht gebildet ist aus
einem oder mehreren polyolefinischen Elastomeren, deren Biegemodul unter 200 MPa gemäß ASTM D 790 und deren Vicat-Punkt unter 65 °C gemaß ASTM D 1525 liegt,
oder worin die Kernschicht einen Biegemodul zwischen 100 und 350 MPa und einen Vicat-Punkt zwischen 50°C und 65 °C hat, wobei die Kernschicht, bezogen auf Gewichtsprozent gebildet wird aus:
- 60 bis 90 % eines polyolefinischen Elastomeren mit einem Biegemodul unter 200 MPa, vorzugsweise unter 150 MPa und einem Vicat-Punkt zwischen 50 und 60°C,
- 5 bis 30 % von die Schweißbarkeit verbesserndem Harz, ausgewählt insbesondere aus den linearen Polyethylenen mit niedriger Dichte, den Polyvinylacetaten, den ionomeren Harzen, den Polyterpenen, den cyclischen aliphatischen Kohlenwasserstoffharzen,
- 0 bis 20 % Polyethylen mit hoher Dichte,
wobei die polyolefinischen Elastomere ausgewählt sind aus solchen, die folgende Zusammensetzung, bezogen auf das Gewicht, haben:
- Ethylen 50 bis 70 %
- Propylen 30 bis 50 %
- Dienderivat, wie Butadien oder entsprechendes konjugiertes Dien 3 bis 5 %,
oder den Elastomeren auf der Basis von:
- Ethylen 35 bis 75 %
- Propylen 25 bis 65 %.

2. Verbundfilm nach Anspruch 1, dadurch gekennzeichnet, daß die die Zwischenschichten oder äußeren Schichten bildenden Polyolefine auf Polypropylen basieren und einen Biegemodul zwischen 750 MPa und 2500 MPa gemäß ASTM D 790 und einen Vicat-Punkt über oder gleich 127°C gemäß ASTM D 1525 aufweisen.

3. Verbundfilm nach Anspruch 2, dadurch gekennzeichnet, daß die die Zwischenschichten oder äußeren Schichten bildenden Polyolefine einen Biegemodul über oder gleich 780 MPa aufweisen.

4. Verbundfilm nach einem der Ansprüche 2 oder 3, dadurch gekennzeichnet, daß die die Zwischenschichten oder äußeren Schichten bildenden Polyolefine ausgewählt sind aus den Homopolymeren von Polypropylen, den Copolymeren von Ethylen-Propylen mit geringem Ethylengehalt oder einem Gemisch derartiger Polymerer.

5. Verbundfilm nach einem der Ansprüche 2 bis 4, dadurch gekennzeichnet, daß die Polyolefine auf der Basis von Polypropylen, die die Zwischenschichten oder äußeren Schichten bilden, in einem Anteil unter 30 %, vorzugsweise zwischen 5 und 20 %, bezogen auf das Gewicht des Gemischs, mit einem linearen Polyethylen mit niedriger Dichte verbunden sind.

6. Verbundfilm nach Anspruch 1, dadurch gekennzeichnet, daß die Polyolefine auf der Basis von Polypropylen, die die Zwischenschichten oder äußeren Schichten bilden, einen Biegemodul zwischen 600 und 750 MPa, vorzugsweise 620 - 720 MPa gemaß ASTM D 790 und einen Vicat-Punkt zwischen 120 und 127°C gemäß ASTM D 1525 aufweisen.

7. Verbundfilm nach Anspruch 6, dadurch gekennzeichnet, daß die Polyolefine auf der Basis von Polypropylen in einem Anteil unter 30 % und vorzugsweise zwischen 5 und 20 %, bezogen auf das Gewicht des Gemischs, mit einem linearen Polyethylen niedriger Dichte verbunden sind.

8. Verbundfilm nach Anspruch 6 oder 7, dadurch gekennzeichnet, daß die Polyolefine auf der Basis von Polypropylen, die die Zwischenschichten oder äußeren Schichten bilden, ausgewählt sind aus den Homopolymeren von Polypropylen, den Copolymeren von Ethylen-Propylen mit geringem Ethylengehalt oder einem Gemisch solcher Polymerer.

9. Verbundfilm nach Anspruch 1, dadurch gekennzeichnet, daß die die Zwischenschichten oder äußeren Schichten bildenden Polyolefine gebildet sind aus 1 bis 30 % radikalischem Polyethylen mit niedriger Dichte, 60 bis 94 % linearem Polyethylen mit niedriger Dichte, bezogen auf das Gewicht des Gemischs, und einen Biegemodul zwischen 200 und 600 MPa gemäß ASTM D 790 und einen Vicat-Punkt zwischen 100 und 125°C gemäß ASTM D 1525 aufweisen.

10. Verbundfilm nach Anspruch 1, dadurch gekennzeichnet, daß das die Kernschicht bildende Polymere einen Biegemodul unter 150 MPa gemäß ASTM D 790 und einen Vicat-Punkt unter 60°C gemäß ASTM D 1525 aufweist.

11. Verbundfilm nach einem der Ansprüche 1 bis 5, dadurch gekennzeichnet, daß die Kernschicht einen Biegemodul zwischen 100 und 350 MPa und einen Vicat-Punkt zwischen 50 und 65°C hat, wobei die Kernschicht ausgedrückt in Gewichtsprozent gebildet ist aus:
- 60 bis 90 % eines polyolefinischen Elastomeren mit einem Biegemodul unter 200 MPa, vorzugsweise unter 150 MPa und einem Vicat-Punkt zwischen 50 und 60°C,
- 5 bis 30 % die Schweißbarkeit verbessenidem Harz, ausgewählt insbesondere aus den linearen Polyethylenen mit niedriger Dichte, den Polyvinylacetaten, den ionomeren Harzen, den Polyterpenen, den cyclischen aliphatischen Kohlenwasserstoffharzen,
- 0 bis 20 % Polyethylen mit hoher Dichte, das die Bearbeitbarkeit erleichtert,
wobei diese Kemschicht an zwei äußere Schichten oder Zwischenschichten mit einem Biegemodul zwischen 750 MPa und 2500 MPa, vorzugsweise zwischen 750 und 1500 und vorteilhaft über 780 MPa und einem Vicat-Punkt zwischen 127 und 155°C gebunden ist.

12. Recyclisierbarer und/oder verbrennbarer Verbundfilm nach Anspruch 1, dadurch gekennzeichnet, daß er zwei äußere Schichten aufweist, gebildet aus einem oder mehreren Polyolefinen auf der Basis von Polypropylen mit einem Biegemodul zwischen 600 und 750 MPa, vorzugsweise 620 - 720 MPa gemäß ASTM D 790 und einem Vicat-Punkt zwischen 120 und 127°C gemäß ASTM D 1525, daß diese Polyolefine gegebenenfalls in einem Anteil unter 30 % und vorzugsweise zwischen 5 und 20 %, bezogen auf das Gewicht des Gemisches, an ein lineares Polyethylen mit niedriger Dichte gebunden sind, und daß sie ausgewählt werden aus den Homopolymeren von Polypropylen, den Ethylen-Propylen-Copolymeren mit geringem Ethylengehalt oder einem Gemisch solcher Polymerer.

13. Verbundfilm nach einem der Ansprüche 1 bis 12, dadurch gekennzeichnet, daß er in einer Dreischicht-Sandwich-Struktur in den folgenden Gewichtsanteilen gebildet ist:
- erste äußere Schicht 2,5 bis 35 %,
- Kernschicht 30 bis 95 %,
- zweite äußere Schicht 2,5 bis 35 %, und daß er vorzugsweise eine Dicke zwischen 2 und 20 Mikrometer aufweist.

14. Verwendung der Filme nach einem der Ansprüche 1 bis 13 zur Umhüllung von Gegenständen, insbesondere ausgewählt aus Papeterieprodukten, Nahrungsmittel- oder Haushaltsprodukten.

15. Verfahren zur Herstellung eines wärmeschrumpfbaren und recyclisierbaren Verbundfilms nach einem der Ansprüche 1 bis 13, dadurch gekennzeichnet, daß man die Polymere und Additive der verschiedenen Schichten vermischt, und anschließend der Co-Extrusion dieser Schichten zur Bildung eines Verbundfilms unterzieht, worauf diesem Schritt eine Doppel-Streckung folgt.
